Europäisches Patentamt

European Patent Office

Office européen des brevets

(11) Numéro de publication: **0 412 915 A1**

## (12) DEMANDE DE BREVET EUROPEEN

(21) Numéro de dépôt: 90420337.9

(22) Date de dépôt: 12.07.90

(51) Int. Cl.5: **C08G 77/62**, C08J 3/24, C04B 35/00, C04B 35/58, C08K 3/28

(30) Priorité: 10.08.89 FR 8910941

(43) Date de publication de la demande:
13.02.91 Bulletin 91/07

(84) Etats contractants désignés:
AT BE CH DE DK ES FR GB GR IT LI LU NL SE

(71) Demandeur: RHONE-POULENC CHIMIE
25, quai Paul Doumer
F-92408 Courbevoie Cédex(FR)

(72) Inventeur: Chassagneux, Evelyne
rue des Grés
F-69390 Millery(FR)
Inventeur: Lepage, Jean-Luc
6 chemin des Tours
F-69340 Francheville(FR)

(74) Mandataire: Dubruc, Philippe et al
RHONE-POULENC CHIMIE Service Brevets
Chimie 25, quai Paul-Doumer
F-92408 Courbevoie Cédex(FR)

(54) Procédé de réticulation par voie humide de polysilazanes, notamment pour l'obtention de fibres céramiques.

(57) La présente invention concerne un procédé de réticulation de polysilazanes, caractérisé en ce qu'il comporte la mise en contact des polysilazanes avec une quantité efficace d'une mélange gazeux réticulant ammoniac/vapeur d'eau, lesdits polysilazanes présentant par molécule au moins un motif de formule ≡ Si - NH - Si ≡.

Utilisation des polysilazanes ainsi réticulés à la préparation notamment de fibres céramiques par pyrolyse.

EP 0 412 915 A1

# PROCEDE DE RETICULATION PAR VOIE HUMIDE DE POLYSILAZANES, NOTAMMENT POUR L'OBTENTION DE FIBRES CERAMIQUES

La présente invention a trait à un procédé de réticulation de polysilazanes.

Elle concerne également, à titre d'application, l'utilisation des polysilazanes ainsi réticulés pour la préparation de matériaux céramiques à base de carbure et/ou nitrure de silicium.

L'idée de préparer des produits céramiques, chargés ou non, à base de carbure et/ou nitrure de silicium par décomposition thermique de composés précurseurs du type polysilazane, notamment organopolysilazane ou organopoly(disilyl)silazane, est décrite dans de nombreux articles et brevets ont été publiés sur le sujet.

Les organopolysilazanes et les organopoly(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

L'intérêt d'une telle voie polymère réside surtout dans les possibilités de mise en forme de ce type de produits, et plus particulièrement pour l'obtention, après pyrolyse, d'articles céramiques en $Si_3N_4$, SiC, SiNC, ou leurs mélanges, sous forme de fibres, films, pellicules, ou revêtements plus ou moins minces.

En fait, la mise en oeuvre des polysilazanes sous la forme de fibres constitue probablement un de leurs avantages principaux.

Selon un schéma désormais classique, des polysilazanes (après ramollissement éventuel s'ils sont initialement a l'état solide) sont filés en fibres continues par tout moyen connu en soi, notamment par extrusion à travers des filières, ces fibres sont ensuite traitées dans le but notamment d'améliorer leur tenue thermique et/ou mécanique, puis pyrolysées pour donner finalement les fibres en céramique désirées.

Le traitement de la fibre préalablement à sa pyrolyse, appelé souvent indifféremment traitement de durcissement, d'infusibilité ou bien encore de réticulation, constitue une étape essentielle de tout procédé visant à la préparation de fibres céramiques par une voie polymères silazanes.

A ce jour, le durcissement des fibres polysilazanes fait appel soit à des méthodes physiques (irradiations) soit à des méthodes thermochimiques.

Parmi les procédés connus, plus spécifiquement appliqués à la réticulation de fibres on peut, en particulier, citer :

US-A-3 853 567 enseignant :

- un traitement thermique sous atmosphère inerte et/ou humide entre la température ambiante et la température de ramollissement du polymère et
- une oxydation du polymère par des oxydants chimiques classiques, air, $O_2$, $O_3$, etc .....
- un traitement par un acide de Lewis comme $AlCl_3$.

EP-A-206 449 enseignant la réticulation par de la vapeur d'eau suivie d'une pyrolyse à partir de 750 °C.

EP-A-245 047 enseignant la réticulation par du chlorure de thionyle gazeux.

EP-A-259 944 enseignant la réticulation de polysilazane porteur de groupe vinyle, d'un composé a fonction mercapto et d'un photoiniateur, au moyen d'un rayonnement U.V.

FR-A-2 583 744 enseignant la réticulation d'un polysilazane particulier par $NH_3$. L'ammoniac est en fait inactif sur des silazanes sans motifs $\equiv Si - NH - Si \equiv$.

FR-A-2 611 208 enseignant la réticulation de polysilazane soit par un rayonnement U.V., de préférence en présence de photoiniateur ou d'un agent de vulcanisation, soit par un faisceau d'électrons. Le polysilazane utilisé résulte nécessairement de l'aminolyse par un disilazane de $\alpha,\omega$-bis(halogénodiorganosilyle)éthane sur un dihalogénodiorganosilane.

Les procédés de réticulation par oxydation chimique présentent l'inconvénient sérieux d'introduire des quantités importantes d'oxygène dans la fibre céramique, ce qui se traduit en général par une altération sensible des propriétés physicochimiques, en particulier sur ses propriétés mécaniques.

Les procédés de réticulation par rayonnement sont de mise en oeuvre délicate et onéreuse. Ils nécessitent généralement des polysilazanes particuliers d'un coût élevé. En outre, dans l'application fibre, comme illustré par exemple par EP-A-245 047 précité, dans les procédés industriels, la fibre polymère après filage et réticulation est bobinée avant de subir éventuellement d'autre traitement et, de toute façon, de subir le traitement final de pyrolyse.

Il est clair que la fibre réticulée doit présenter des propriétés mécaniques suffisantes pour pouvoir être bobinée puis dévidée et, en particulier les fibres réticulées ne doivent pas présenter de caractère collant de façon à pouvoir être bobinées, dévidées et rebobinées sans difficultés.

Les procédés connus cités ci-dessus ne permettent pas d'obtenir une fibre de polysilazane réticulée présentant l'ensemble des propriétés ci-dessous :
- présenter les propriétés d'une fibre textile, c'est-à-dire être bobinables et dévidables sans être altérées pour pouvoir être ultérieurement manipulables et pyrolysables sans difficulté,
- présenter, après céramisation, une teneur en oxygène faible, généralement inférieur à 10 % en poids,
- présenter un rendement en céramique et des propriétés physicochimiques après céramisation convenables.

Le but de la présente invention est précisément de proposer un procédé de réticulation de polysilazane qui présente l'ensemble des propriétés ci-dessus.

Ce but et d'autres est atteint par la présente invention qui concerne en effet un procédé de réticulation de polysilazane, caractérisé en ce qu'il comporte la mise en contact d'au moins un polysilazane avec une quantité efficace d'un mélange gazeux ammoniac/vapeur d'eau, ledit polysilazane présentant par molécule au moins un motif de formule $\equiv Si - NH - Si \equiv$.

La Demanderesse a pu constater que, de façon totalement inattendue, un tel traitement permet d'obtenir des polysilazanes infusibles présentant de bonnes propriétés d'infusibilité et d'insolubilité dans les solvants organiques usuels. Il conduit à une fibre réticulée de qualité textile bobinable et dévidable présentant une faible teneur en oxygène généralement inférieure à 5 % en poids avant céramisation et inférieure à 10 % en poids après céramisation.

Selon l'invention on entend par les termes "caractère textile" ou "qualité textile" une fibre qui après le traitement pour la rendre infusible est d'une part bobinable et dévidable les fibres ne collant pas entre elles et sur la bobine et, d'autre part, les filaments constitutifs de la fibre ne collent pas entre eux et conservent leur identité.

En outre la présente invention a pu mettre en évidence qu'à teneur égale en vapeur d'eau, la présence d'ammoniac conduit généralement à une fibre réticulée ayant une teneur en oxygène plus faible, ce qui permet d'obtenir, après minéralisation, un produit céramique, en particulier une fibre, de propriétés mécaniques améliorées.

Les polysilazanes de départ sont des produits bien connus amplement décrits dans la littérature ; ils doivent comporter par molécule au moins un motif de formule $\equiv Si - NH - Si \equiv$ pour pouvoir obtenir conformément à l'invention l'effet de synergie entre la vapeur d'eau et l'ammoniac.

Pour préparer de tels polysilazanes on peut utiliser notamment n'importe quel produit de réaction entre :

- (a) au moins un organohalogénosilane de formule (I) :

$R_a X_{4-a} Si$    (I)

dans laquelle X désigne un halogène, généralement le chlore, et les radicaux R, identiques ou différents, sont choisis parmi un radical alkyle linéaire ou ramifié éventuellement halogéné, un radical cycloalkyle, un radical aryle tel que le radical phényle et naphtyle, un radical arylalkyle ou alkylaryle, et l'indice a étant égal à 0, 1, 2 ou 3, et

- (b) un composé organique ou organosilylé comportant au moins un groupement $NH_2$ comme par exemple l'ammoniac et les amines primaires.

Dans la formule (I), comme exemples de radicaux R alkyle, on peut citer les radicaux méthyle, éthyle, propyle, butyle, pentyle, hexyle, heptyle et octyle ; R cycloalkyle : on peut citer les radicaux cyclopentyle, cyclohexyle et cycloheptyle; R arylalkyle : les radicaux benzyle, phénylethyle; R alkylaryle : les radicaux tolyle et xylyle.

A titre d'exemple, comme organohalogénosilane utilisable seul ou en mélange, on peut citer :

$(CH_3)_2 SiCl_2$, $(CH_3)_3 SiCl$, $CH_3 SiCl_3$, $SiCl_4$
$(CH_3)_2 Si(CH_2 Cl)_2$, $(CH_3)_3 SiCH_2 Cl$, $CH_3 Si(CH_2 Cl)_3$
$(C_6 H_5)_2 SiCl_2$, $(C_6 H_5)(CH_3)SiCl_2$, $C_6 H_5 SiCl_3$
$(CH_3)(CH_3 CH_2)SiCl_2$.

Comme exemple de composés comportant au moins un groupement $NH_2$ utilisables seuls ou en mélange pour la synthèse des organopolysilazanes ci-dessus, on peut citer : l'ammoniac, la méthylamine, la diméthylamine, l'éthylamine, la cyclopropylamine, l'éthylènediamine, la tétraméthylènediamine, l'hexaméthylènediamine, l'aniline, la méthylaniline, la diphénylamine, la toluidine, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthydisilazane.

Les organopolysilazanes obtenus en fin de réaction englobent plus spécifiquement :

1. - les polymères linéaires répondant aux formules :

$H_2 N (R_2 SiNH)_p SiR_2 NH_2$    (II)

et

$R_3SiNH(R_2SiNH)_p, SiR_3$     (III)

dans lesquelles R a la signification donnée pour la formule (I) ; p et p' sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR-A-1 086 932, brevet américain US-A-2 564 674).

De façon générale, la réaction d'organohalogénosilane sur une organoamine est décrite dans les brevets américains US-A-3 853 567 et US-A-3 892 583 et la réaction d'organohalogénosilane sur un disilazane est décrite dans le brevet belge BE-A-888 787.

2. - les polymères cycliques répondant à la formule :

$(R_2SiNH)_n$     (IV)

dans laquelle n est compris entre 3 et 10, généralement n = 3,4 et R a la signification donnée pour la formule (I) ci-dessus. Ils sont décrits notamment dans le brevet britannique GB-A-881 178.

3. - les polymères ramifiés formés de motifs choisis parmi ceux de formule $R_3SiNH_{0,5}$, $R_2SiNH$, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A-1 379 243, FR-A-1 392 853 et FR-A-1 393 728).

Les organopoly(disilyl)silazanes de départ susceptibles d'être réticulés selon un procédé conforme à l'invention, sont également des produits bien connus en soi et aisés à préparer. Ils peuvent être notamment préparés par action :

- (a) d'un composé organique ou organosilylé comportant au moins un groupement $NH_2$ ou NH comme par exemple l'ammoniac, les amines primaires ou secondaires, les silylamines etc...,

- (b) au moins un organohalogénodisilane de formule :

$R_bX_{3-b}Si\ Si\ R_cX_{3-c}$     (V)

dans laquelle les radicaux R identiques ou différents ont la même signification que ci-dessus et b est égal à 0,1, 2 ou 3 et c est égal à 0, 1 ou 2, et X est un halogène, généralement le chlore.

Comme exemple de composés de formule (V) on peut citer :

$(CH_3)_2\ ClSiSi\ (CH_3)_2\ Cl$, $(CH_3)_2Cl\ SiSi\ CH_3\ Cl_2$

$CH_3\ Cl_2\ SiSi\ CH_3\ Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale, la réaction d'halogénodisilane, en présence éventuellement d'halogenosilane, sur l'ammoniac est décrite dans le brevet européen EP-A-75 826. La réaction d'halogénodisilane sur un disilazane est décrite dans le brevet français FR-A-2 497 812.

Enfin, comme décrit dans le brevet EP-A-75 826, il est possible de préparer des organopoly(disilyl)-silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Bien entendu, il est également possible d'utiliser à titre de polysilazanes de départ des polysilazanes qui, issus des réactions d'aminolyse décrites ci-dessus, ont subi en outre des traitements catalytiques bien connus destinés à provoquer, suivant la nature de l'aminolysat, une polymérisation et/ou une copolymérisation et/ou un réarrangement des molécules, et ceci dans le but d'augmenter encore leur poids moléculaire, mais tout en gardant aux polysilazanes obtenus leur caractère fusible et soluble dans les solvants organiques.

Les conditions de mise en oeuvre de tels traitements catalytiques sont décrites notamment dans les documents suivants, tous cités à titre de références non limitatives : JP-A-77/93 100, US-A-3 007 886, US-A-3 187 030 et FR-A-2 577 933.

Il est également possible d'utiliser à titre de polysilazanes de départ des copolymères silanes-silazanes obtenus par polycondensation, en milieu solvant et en présence d'un métal alcalin, notamment le sodium, entre des silanes chlorés et des disilazanes chlorés, comme décrit dans la demande de brevet français déposée sous le n° 87/08 091, ou bien encore des polycarbosilazanes obtenus par thermolyse, de préférence opérée sous atmosphère inerte et à une température comprise entre 250 °C et 550 °C, des copolymères ci-dessus.

Il va aussi bien entendu de soi que les polysilazanes de départ destinés à être réticulés peuvent par ailleurs contenir des charges, de préférence choisies parmi $SiO_2$, $Si_3N_4$, $SiC$, $BN$, $B_2O_3$, $B_4C$, $AlN$, $Al_2O_3$, $Al_4C_3$, $TiN$, $TiO_2$, $ZrO_2$, $ZrC$, $VO_2$, etc...En outre, si besoin est pour une application donnée, leur viscosité peut être ajustée classiquement par ajout d'un solvant organique compatible avec le polysilazane considéré, comme par exemple du benzène, du toluène, de l'hexane, du cyclohexane, de l'éther isopropylique, de l'éther éthylique, du dichlorométhane ou du chlorobenzène.

Conformément à l'invention, et après donc mise en forme éventuelle, les polysilazanes définis ci-dessus sont alors traités au moyen de mélange gazeux réticulant ammoniac/eau.

Par quantité efficace de mélange gazeux réticulant, on entend une quantité suffisante pour réticuler convenablement le polysilazane et lui assurer ainsi un caractère substantiellement infusible et insoluble dans la plupart des solvants organiques usuels (pentane, hexane, toluène, benzène...).

Dans la pratique, on recommande d'utiliser de 0,01 à 10 %, de préférence de 0,5 à 5 % en poids de mélange gareux réticulant eau et ammoniac, par rapport au poids du polysilazane à traiter.

La température à laquelle est menée le traitement, et la durée de ce dernier, peuvent varier dans une large mesure et dépendent de la nature du polysilazane à durcir, ainsi que de la quantité de mélange gazeux mise en jeu. D'une manière générale, la durée est liée à la température du traitement : plus cette température est élevée et plus la durée du traitement peut être raccourcie, l'important étant d'aboutir dans tous les cas en fin de traitement à un état substantiellement infusible et insoluble.

D'une manière pratique, cette température est généralement comprise entre l'ambiante et la température de ramollissement du polysilazane à durcir ; elle est de préférence comprise entre 50 °C et une température légèrement inférieure à celle correspondant au point de ramollissement du polysilazane à durcir, généralement 80 °C.

La durée du traitement n'étant pas critique, elle peut varier de quelques dizaines de minutes à plusieurs heures, selon les températures mises en jeu.

La mise en contact polysilazane/mélange gazeux réticulant peut se faire selon tout moyen connu en soi.

Le mélange gazeux réticulant peut être utilisé pur, ou bien encore, de préférence, dilué dans un gaz inerte, tel qu'un gaz d'argon (ou tout autre gaz rare) ou d'azote par exemple.

On opère généralement à pression atmosphérique, bien que des pressions inférieures ou supérieures ne soient bien évidemment pas exclues. En outre, la mise en contact entre le polysilazane et le mélange gazeux réticulant peut être statique ou dynamique, c'est à dire réalisée sous balayage ; elle est de préférence réalisée sous balayage en utilisant par exemple le dispositif décrit par EP-A-245 047 précité.

De préférence, au sein du mélange gazeux réticulant le rapport pondéral eau/ammoniac est compris entre 1/20 et 20/1, de préférence entre 1/10 et 10/1.

Par ailleurs, dans le cas préféré où le mélange réticulant est dispersé au sein d'une atmosphère gazeuse inerte (gaz rares, azote) il est recommandé d'utiliser une teneur en poids de mélange réticulant au sein de cette atmosphère inerte comprise entre 0,01 et 10, de préférence entre 0,05 et 5 %.

Les polysilazanes peuvent être traités :
- soit en isotherme à une température inférieure au point de ramollissement du polymère avec des variations de température,
- soit à température variable, dans ce cas la vitesse de montée en température est alors choisie de telle sorte que la température de traitement reste inférieure à la température d'infusibilisation.

On recommande d'utiliser une vitesse de montée en température comprise entre 1 et 10 °C/heure pour des températures de traitement comprises entre 30 et 200 °C.

Les précurseurs polysilazanes sont dits infusibles lorsque leur point de ramollissement est supérieur à 260 °C et lorsque, après minéralisation, la forme du précurseur (fibre, revêtement) est conservée.

Plus particulièrement dans le cas de la fabrication d'une fibre, d'un objet mis en forme, d'une pellicule ou d'un revêtement, après l'étape de traitement par le mélange gazeux réticulant, il est recommandé de faire subir à la fibre un traitement thermique à 100-250 °C, de préférence en portant lentement la fibre de la température ambiante à une température maximum de 100-250 °C, puis retour à la température ambiante (25 °C).

Cette montée en température peut être effectuée avantageusement pendant une durée comprise entre 5 et 50 heures.

Ce traitement thermique permet d'améliorer encore les propriétés mécaniques de la fibre réticulée sans augmenter sa teneur en oxygène et permet donc d'effectuer sa céramisation en limitant les risques de cassures.

La pyrolyse, c'est-à-dire la minéralisation ou encore la céramisation du polysilazane infusible s'effectue à une température comprise entre 750 et 1 400 °C, de préférence entre 800 et 1 200 °C, sous vide ou sous atmosphère inerte contenant éventuellement de l'ammoniac.

Après pyrolyse, dans, le cas où la céramique se présente sous forme d'une fibre, il est avantageux pour améliorer les propriétés mécaniques de la fibre, de mettre en contact cette fibre avec de l'acide fluorhydrique conformément à l'enseignement de la demande de brevet français 88/06 270 déposée le 10 mai 1988 au nom de la Demanderesse.

Ce traitement supplémentaire de la fibre céramisée permet d'atteindre simultanément les résultats suivants :
- tout d'abord l'élimination des impuretés de surface, et notamment des couches d'oxydes superficielles, comme par exemple de silice,
- ensuite l'élimination substantielle des défauts de surface critiques présents initialement sur la fibre,
- et enfin l'amélioration sensible de la contrainte à la rupture de la fibre.

L'acide fluorhydrique est de préférence utilisé sous la forme d'une solution liquide, mais l'utilisation d'acide fluorhydrique gazeux n'est bien entendu pas exclue.

D'autre part, cette solution liquide est de préférence aqueuse.

Le taux de dilution de l'acide HF dans ladite solution est alors avantageusement compris entre 5 et 30 % en volume, et se situe de préférence aux environs de 10 % en volume.

La durée du traitement peut varier dans une large mesure, c'est-à-dire dans un intervalle de temps s'étalant entre quelques minutes et plusieurs heures et plus particulièrement entre 5 minutes et 5 heures ; néanmoins, les durées de traitement comprises entre 5 et 60 minutes sont généralement suffisantes pour arriver au résultat recherché.

Concernant enfin la température à laquelle est menée le traitement, elle peut être comprise entre l'ambiante et 100 °C, mais se situe de préférence aux environs de 20-30 °C, et encore plus préférentiellement vers 25 °C.

D'une manière générale, le réglage des trois paramètres interdépendants que sont la concentration, le temps et la température, est déterminé en tenant compte du fait qu'un traitement trop fort (HF trop concentré et/ou température trop élevée) ou trop long, peut endommager la fibre en modifiant ses propriétés à coeur (diminution de la densité, apparition d'une corrosion par piqûres, modification de la morphologie ou autres).

Pratiquement, on arrête le traitement selon l'invention dès lors que l'apparition d'une surface parfaitement lisse et propre est observée.

Les fibres traitées selon l'invention peuvent trouver une application importante comme agents de renforcement de composites à matrice verre, métal ou céramique, compte-tenu du fait que, d'une manière générale, il est bien connu que dans de tels matériaux les caractéristiques de l'interface fibres-matrice ont une grande importance.

Dans ce qui suit ou ce qui précède, sauf mentions contraires expresses, les % et parties sont en poids.

Les exemples suivants illustrent l'invention.

Dans ces exemples on a mesuré le module élastique E en gigapascal (GPa) selon une méthode analogue à la norme ASTM.D3379-75 sur filaments unitaires.

La contrainte à la rupture tr dénommée également résistance à la traction est mesurée en mégapascal (MPa) selon une méthode analogue à la norme ASTM.D3379-75 sur un filament unique de 10 mm de longueur.

La valeur de tr indiquée est celle obtenue en faisant la moyenne arithmétique sur 30 éprouvettes prélevées de façon aléatoire.

Pour la mesure de E et tr on a utilisé un appareil de traction ERICHSEN®, muni d'un capteur référence 717DS-5 NEWTONS. Cet appareil est assité par ordinateur et présente une vitesse de traction de 1 mm/minute.

## - EXEMPLE 1 :

Un polysilazane de départ est tout d'abord préparé de la manière suivante :
dans un réacteur de trois litres double enveloppe muni d'une agitation mécanique, d'un tube d'entrée des gaz et d'un condenseur, on effectue une coammonolyse, en présence de 1,1 litre d'éther isopropylique, d'un mélange de $CH_3SiCl_3$ (0,85 mole) et de $(CH_3)_2SiCl_2$ (0,59 mole). Ce mélange dans l'éther isopropylique est refroidi à 3 °C et est maintenu à cette température pendant l'introduction de $NH_3$ gazeux. Le débit d'introduction de $NH_3$ est d'environ 6 ml/s et l'addition a lieu en 6 heures. En fin d'essai, on filtre le chlorure d'ammonium formé sur verre fritté (diamètre moyen des pores : 10 $\mu$m) et on récupère une solution limpide de polysilazane. Cette solution est ensuite concentrée puis traitée avec de l'acide triflique selon des modalités pratiques définies dans la demande de brevet français FR-A-2 577 933.

Cette solution est ensuite évaporée (élimination du solvant). On récupère ainsi un polysilazane dont la température de ramollissement est de 130 °C (mesurée au banc KOFFLER).

Ce polysilazane est ensuite filé par extrusion sous forme de fibres à 13 filaments, chaque filament présente un diamètre de 15 μm. Puis la fibre est bobinée.

Dans une étuve munie d'un programmateur de températures, balayée par de l'azote sec, on charge sous atmosphère inerte une bobine de 50 g du fil polysilazane ainsi préparé. Après trois purges successives (vide primaire {pression inférieure à 0,1 KPa} puis azote) on introduit a 25 °C un courant d'azote chargé de 1 % d'eau et 1 % d'ammoniac, tout en commençant le cycle thermique suivant :

- 1 : 25 °C à 180 °C : 1 °C/h
- 2 : 120 °C à 300 °C : 3 °C/h
- 3 : palier à 300 °C : 4 heures
- 4 : retour à 25 °C : 25 °C/H.

A partir de 180 °C lors de la montée en température, on remplace l'azote chargé eau et ammoniac par de l'azote sec et on poursuit par une montée en température de 180 °C à 350 °C à 5 °C/heure.

La quantité totale d'eau et d'ammoniac utilisée représente 4 % du poids du polymère de départ, soit 2 grammes.

A l'issue de ce traitement, on récupère une bobine de fibre ayant les propriétés suivantes :
- couleur blanche,
- parfaitement dévidable,
- homogène, caractère textile ne présentant pas de collage entre les filaments constitutifs du fil,
- infusible (Tr > 350 °C) - Tr = température de ramollissement,
- teneur en oyygène : 4 %.

On pyrolyse les fibres à 1 300 °C sous azote et on obtient une fibre céramique noire ayant les propriétés mécaniques suivantes :
- tr = 1 200 MPa,
- E = 125 GPa,
- $\phi$ = 11,5 μm,
- teneur en oxygène de la fibre après céraminsation : 8 %.

## - EXEMPLE 2 ET EXEMPLES COMPARATIFS 3 ET 4 :

On répète exactement le mode opératoire de l'exemple 1 sauf que le % d'eau et d'ammoniac dans le courant d'azote varie.

Les résultats obtenus sont rassemblés dans le tableau ci-après.

### TABLEAU

| EXEMPLE | 1 | 2 | 3 | 4 |
|---|---|---|---|---|
| % NH3 | 1 % | 1 % | 0 % | 1 % |
| % H2O | 1 % | 0 % | 1 % | 0,1 % |
| CARACTERE TEXTILE | oui | non* | non** | oui |
| % OXYGENE AVANT CERAMISATION | 4 % | - | 4 % | 3 % |
| % OXYGENE APRES CERAMISATION | 8 % | 2 % | 8 % | 6 % |

\* fibre fondue sur la bobine
\*\* filaments collés entre eux à l'intérieur du fil.

Du tableau il ressort que seul le mélange ammoniac/eau permet d'obtenir des fibres céramisables ayant les propriétés désirées.

**Revendications**

1. - Procédé de réticulation de polysilazane, caractérisé en ce qu'il comporte la mise en contact d'au moins un polysilazane avec une quantité efficace d'un mélange gazeux réticulant ammonciac/vapeur d'eau, ledit polysilazane présentant par molécule au moins un motif de formule ≡ Si - NH - Si ≡.

2. - Procédé selon la revendication 1, caractérisé en ce que les quantités de vapeur d'eau plus ammoniac sont comprises entre 0,01 et 10 % par rapport au polysilazane de départ.

3. - Procédé selon l'une quelconque des revendications précédentes, caractérisé en ce que ledit mélange gazeux réticulant présente un rapport pondéral eau/ammoniac compris entre 1/20 et 20/1.

4. - Procédé selon l'une quelconque des revendications précédentes, caractérisé en ce que le mélange gazeux réticulant est dispersé au sein d'une atmosphère gazeuse inerte suivant une teneur comprise entre 0,01 et 10 % en poids.

5. - Procédé selon l'une quelconque des revendications précédentes, caractérisé en ce que ladite mise en contact est effectuée entre la température ambiante et la température de ramollissement du polysilazane, cette température étant fixe ou variable.

6. - Procédé selon l'une quelconque des revendications précédentes, caractérisé en ce que avant ladite mise en contact, on met ledit polysilazane à une forme d'article désirée, en particulier sous forme d'une fibre.

7. - Procédé selon l'une quelconque des revendications 1 à 6, caractérisé en ce que le polysilazane réticulé, subit en outre un traitement thermique à une température maximum de 100-250 °C.

8. - Procédé de préparation d'un produit céramique à base de SiC et/ou $Si_3N_4$, caractérisé par le fait qu'il consiste à pyrolyser un polysilazane réticulé selon un procédé conforme à l'une quelconque des revendications 1 à 7.

9. - Fibre obtenue par le procédé de la revendication 8, caractérisée en ce qu'on met en contact cette fibre avec de l'acide fluorhydrique, de préférence en solution aqueuse.

Office européen
des brevets

**RAPPORT DE RECHERCHE
EUROPEENNE**

Numéro de la demande

**EP 90 42 0337**

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 206 449 (DOW CORNING) <br> * Revendications 1,6,7 * <br> − − − | 1 | C 08 G 77/62 <br> C 08 J 3/24 <br> C 04 B 35/00 |
| A,D | FR-A-2 583 744 (CHISSO) <br> * Revendications 1,2,3; page 3, lignes 21-31 * <br> − − − | 1 | C 04 B 35/58 <br> C 08 K 3/28 |
| A | PATENT ABSTRACTS OF JAPAN, vol. 13, no. 472, 25 octobre 1989, page 3820 C-647; <br> & JP-A-1 183 522 (SEKIYU SANGYO KATSUSEIKA CENTER) 21-07-1989 <br> * Abrégé * <br> − − − | 1 | |
| A | EP-A-0 266 860 (DOW CORNING) <br> * Revendications 1,2,3,7; page 3, lignes 1-6,12-14 * <br> − − − − | 1 | |

|  | DOMAINES TECHNIQUES RECHERCHES (Int. Cl.5) |
|---|---|
| | C 08 G <br> C 08 L <br> C 04 B <br> C 08 J <br> C 08 K |

Le présent rapport de recherche a été établi pour toutes les revendications

| Lieu de la recherche | Date d'achèvement de la recherche | Examinateur |
|---|---|---|
| La Haye | 29 novembre 90 | DEPIJPER R.D.C. |